# EUROPÄISCHE PATENTSCHRIFT

(11) **EP 2 238 392 B1**
(45) Veröffentlichungstag und Bekanntmachung des Hinweises auf die Patenterteilung: **25.04.2012**
(21) Anmeldenummer: 09706457.0
(22) Anmeldetag: 30.01.2009
(51) Int. Cl.: F24J 2/52, F24J 2/04, H01L 31/042, H01L 31/048

(54) **BEFESTIGUNGSSYSTEM FÜR EIN PLATTENFÖRMIGES BAUELEMENT**
FASTENING SYSTEM FOR A PLATE-SHAPED STRUCTURAL ELEMENT
SYSTÈME DE FIXATION POUR UN COMPOSANT EN FORME DE PANNEAU

(30) Priorität: 02.02.2008 DE 102008007334
(43) Veröffentlichungstag der Anmeldung: 13.10.2010
(73) Patentinhaber: SCHOTT Solar AG, 55122 Mainz (DE); Walter Wurster Gmbh, 70771 Leinfelden-Echterdingen (DE)
(72) Erfinder: NEUNER, Roland, 61231 Bad Nauheim (DE); SCHWEIZER, Roland, 72631 Aichtal (DE); WELTER, Christian, 60433 Frankfurt/Main (DE)
(74) Vertreter: Brüning, Rolf
(86) Internationale Anmeldenummer: PCT/DE2009/000140
(87) Internationale Veröffentlichungsnummer: WO 2009/095009

(56) Entgegenhaltungen:
- DE-U1- 20 303 431
- JP-A- 6 136 895
- JP-A- 2002 250 105
- JP-A- 2003 056 131
- JP-A- 2003 105 939
- JP-A- 2004 027 734
- JP-A- 2004 100 426
- JP-A- 2007 224 629
- JP-A- 2007 231 514

## Beschreibung

Die Erfindung betrifft ein Befestigungssystem für ein plattenförmiges Bauelement auf einem Schrägdach, wobei das plattenförmige Bauelement ein Modul bildend in einem Rahmen aus profilierten Trägem wasserdicht eingefasst ist und die Dacheindeckung vollwertig ersetzt, wobei zur Montage von in First-Traufe-Richtung benachbarten Modulen die quer zur First-Traufe-Richtung verlaufenden traufseitigen und firstseitigen Querträger des Rahmens aufeinander abgestimmte ineinander greifende Profile aufweisen, die eine regensichere Verbindung bilden, so dass eine partielle Überdeckung der Module in Längsrichtung nur im Bereich dieser Querträger erfolgt, Als plattenförmige Bauelemente kommen insbesondere rechteckige photovoltaische Module (PV-Module) oder solarthermische Module in Betracht.

Ein derartiges Befestigungssystem ist aus der DE 203 03 431.7-U1 bekannt Bei diesem Befestigungssystem für ein plattenförmiges Bauelement auf einem Schrägdach, insbesondere für ein photovoltaisches Modul, ersetzt das plattenförmige Bauelement die Dacheindeckung und liegt auf zumindest zwei in First-Traufe-Richtung angeordneten Trägem auf, wobei an allen Rändern des plattenförmigen Bauelements Träger vorgesehen sind, die einen Grundrahmen bilden, der das plattenförmige Bauteil abstützt, seitlich umgreift und oberseitig wasserdicht einfasst.

Als Längsrichtung wird nachfolgend die Linie First-Traufe, als Querrichtung eine Parallele zum First bzw. zur Traufe bezeichnet. Bei dem vorstehend genannten Befestigungssystem sind die plattenförmigen Bauelemente in Längsrichtung schuppenartig überdeckend verlegt. Ein photovoltaisches Modul weist ein Laminat mit photovoltaischen Elementen und einen Rahmen auf. Bereits bei der Herstellung werden mehrere photovoltaische Elemente eines Laminats elektrisch hintereinander geschaltet zu einer Spannungskette, um eine höhere Spannung zur Verfügung zu stellen. Nachteilig ist dabei, dass ein abgeschattetes Element den Wirkungsgrad der gesamten Kette herabsetzt. Daher sind Laminate so ausgelegt, dass nach der ordnungsgemäßen Montage auf dem Dach keine Abschattung erfolgt. Derzeit wird die Mehrzahl der Laminate zu Modulen für die Aufdachmontage gefertigt, wobei die Module auf Stützen nach Art eines Dachhakens über der Dacheindeckung montiert werden. Mehrere Module liegen in Längs- und in Querrichtung parallel nebeneinander, so dass keine Abschattung erfolgt. Die Träger an den Rändern überdecken die Oberseite der Laminate nur in einem äußerst schmalen Randbereich, so dass nahezu die gesamte Oberfläche eines Laminats mit photovoltaischen Elementen belegt ist.

Bei der bisher üblichen Indachverlegung, bei der photovoltaische Module die Dacheindeckung ersetzen, darf wegen der schuppenartigen Überdeckung in Längsrichtung der überdeckte Teil des Laminats keine photovoltaischen Elemente enthalten. Das verteuert die Herstellung und erfordert Sonderanfertigungen.

Aufgabe der vorliegenden Erfindung ist es, ein Befestigungssystem zur Verfügung zu stellen, mit dem plattenförmige Bauelemente, insbesondere in Serie für die Aufdachmontage hergestellte großflächige photovoltaische Laminate, auch in Modulen für die Indachverlegung eingesetzt werden können.

Die Aufgabe wird erfindungsgemäß dadurch gelöst, dass der traufseitige Querträger auf seiner Oberseite eine den Rand des plattenförmigen Bauelements U-förmig umgebende Halterung und an seiner Unterseite eine Auflage zur Befestigung an der Dachkonstruktion aufweist mit einem vom unteren Schenkel der Halterung ausgehenden zur Auflage führenden Steg, von dessen zur Traufe weisender Seite unterhalb der Halterung ein Vorsprung ausgeht, so dass zwischen der Halterung und dem Vorsprung ein Kanal entsteht, und dass der firstseitige Querträger einen zum First weisenden Fortsatz aufweist, der bei der Montage eines traufnahen zweiten Moduls in den Kanal des traufseitigen Querträgers des ersten Moduls einschiebbar ist.

Mit anderen Worten weisen die quer zur First-Traufe-Richtung verlaufenden firstseitigen und traufseitigen Querträger des Rahmens in First-Traufe-Richtung benachbarter Module aufeinander abgestimmte ineinander greifende Profile auf, die eine regensichere Verbindung bilden, so dass eine partielle Überdeckung der Module in Längsrichtung nur im Bereich dieser Querträger erfolgt. Aufgrund der regensicheren Verbindung sind keine zusätzlichen Dichtungswerkstoff erforderlich.

Derartige Module, die an den Längsrändern Längsträger mit an sich bekannten Profilen mit Deckprofil am einen und Wasserlauf am anderen Rand aufweisen, können als vorkonfektionierte Einheiten angeliefert werden, so dass die Montage auf dem Dach sehr einfach ist. Dadurch sowie der Einsparung von Aufwendungen für eine zusätzliche Dachdeckung ist eine äußerst wirtschaftliche Montage möglich.

Die den Rand des plattenförmigen Bauelements U-förmig umgebende Halterung auf der Oberseite des traufseitigen Querträgers gewährleistet eine sichere Befestigung des plattenförmigen Bauelements. Der obere Schenkel des U kann auf dem plattenförmigen Bauelement aufliegen. Das plattenförmige Bauelement kann an dem oberen Schenkel angeklebt sein. In einer anderen Ausführung kann das plattenförmige Bauelement auch auf dem unteren Schenkel abgestützt sein.

Die Montage in Richtung vom First zur Traufe erfolgt in bequemer Weise, weil der traufseitige Querträger an seiner Unterseite eine Auflage zur Befestigung an der Dachkonstruktion aufweist Der traufseitigen Querträger stützt den firstseitigen Träger des benachbarten Moduls ab, so dass dieser nicht gesondert befestigt werden muss. Zu Beginn der Verlegung wird nahe dem First ein Querträger montiert, der wie ein traufseitiger Querträger ausgeführt ist, jedoch ohne Halterung für ein plattenförmiges Bauelement Die Querträger zweier benachbarter Module greifen regensicher ineinander, weil der traufseitige Querträger einen Kanal aufweist, der bei der Montage auf dem Dach einen Fortsatz des benachbarten firstseitigen Querträgers aufnehmen kann. Die Überdeckung des firstseitigen Querträgers erfolgt auf einem zum First weisenden Fortsatz, der bei der Montage eines traufnahen zweiten Moduls in den Kanal des traufseitigen Querträgers des ersten Moduls einschiebbar ist. Besonders einfach ist das Einschieben des zweiten Moduls, wenn der die Unterseite des Kanals bildende Vorsprung am Steg des traufseitigen Querträgers nach unten gekrümmt oder abgeschrägt endet, so dass sich der Kanal trichterartig erweitert. Dadurch wird das Einschieben des zweiten Moduls von der Traufe her erleichtert.

Die Auflage des traufseitigen Querträgers kann in bequemer Weise von der Oberseite her mit der Dachkonstruktion verschraubt werden, wenn die Auflage zur Traufe hin vorragt. Dadurch können Werkzeuge wie Akkuschrauber und dergleichen unbehindert von oben her eingesetzt werden.

Vorteilhafterweise wird unter der Auflage eine in Querrichtung verlaufende Stützleiste montiert, so dass herstellerseitig in der Auflage vorgesehene Schraublöcher unabhängig vom Abstand der Dachsparren benutzt werden können.

Der firstseitige Querträger wird in einfacher Weise abgestützt, wenn er an seiner Basis abgewinkelt ist, so dass der abgewinkelte Abschnitt in moniertem Zustand zweier Module auf der Auflage des benachbarten traufseitigen Querträgers aufliegt.

Da der Wirkungsgrad eines PV-Moduls mit steigender Temperatur abnimmt, ist es vorteilhaft, wenn das plattenförmige Bauelement zur Kühlung hinterlüftet ist. Vorteilhafterweise sind zu diesem Zweck im Querträger Lüftungsöffnungen vorgesehen. Zusätzlich zu den lüftungsöffnungen können Löcher für den Ablauf von Kondens- und/oder Leckwasser vorgesehen sein.

Eventuell eingetriebenes Wasser und Kondenswasser wird zum Wasserlauf der Seitenträger abgeführt, wenn an der Unterseite des Fortsatzes des firstseitigen Querträgers eine nach oben zum First hin offene Wasserrinne vorgesehen ist, in die der Vorsprung vom Steg des traufseitigen Querträgers des ersten Moduls hinein ragen kann. Die Wasserrinne erhält eine besonders günstige Form, wenn deren Unterseite schräg nach oben abgewinkelt oder gekrümmt ausgebildet ist.

Zur Bildung eines Labyrinths im Überdeckungsbereich zweier benachbarter Querträger ist es vorteilhaft, wenn auf der Unterseite des unteren Schenkels der Halterung ein vom Steg beabstandeter Wulst vorgesehen ist, der zum Vorsprung hin in den Kanal ragt.

Das Eindringen von Schlagregen wird verhindert, wenn auf der Oberseite des Fortsatzes des firstseitigen Querträgers eine Lippe vorgesehen ist, die in montiertem Zustand zweier Module an dem Wulst auf der Unterseite des unteren Schenkels der Halterung des traufseitigen Querträgers anliegt. Durch diese labyrinthartige Ausführung des Überdeckungsbereichs beider Querträger kann auf jegliches Dichtungsmaterial verzichtet werden, so dass die Verlegung derartiger Module auch von wenig geübten Kräften ausgeführt werden kann. Auch sind von alterndem Dichtungsmaterial her bekannte Probleme ausgeschlossen.

Zum wasserdichten Anschluss des nächst dem First zu montierenden Moduls ist eine an dieses anschließende Anschlusshaube oder ein Anschluss aus plastisch verformbarem Material vorzusehen, welche firstseitig unter angrenzendes Bedachungsmaterial greifen kann. Zur Seite hin werden Module optimal durch an die Längsträger anschließende Seitenschürzen abgedichtet, welche seitlich an angrenzendes Bedachungsmaterial anschließbar sind.

Zur regendichten Verbindung des nächst der Traufe zu montierenden Moduls eignet sich eine an dieses anschließende Abschlussschürze, welche traufseitig auf angrenzendem Bedachungsmaterial aufliegen kann. Vorzugsweise besteht die Abschlussschürze aus plastisch von Hand verformbarem Material. Die Verwendung von plastisch verformbarem Material hat den Vorteil, dass dieses leicht auf der Baustelle an unterschiedliche Profilformen von Dachplatten angepasst werden kann.

Weitere Einzelheiten, Vorteile und Merkmale der Erfindung ergeben sich nicht nur aus den Ansprüchen, den diesen zu entnehmenden Merkmalen, für sich und/oder in Kombination, sondern auch aus der nachstehenden Beschreibung eines in der Zeichnung dargestellten bevorzugten Aufführungsbeispiels.

Es zeigen:
- Fig. 1: einen traufseitigen Querträger im Querschnitt,
- Fig. 2: einen firstseitigen Querträger im Querschnitt und
- Fig. 3: die miteinander verbundenen Querträger aus Abb 1 und Abb 2 im Querschnitt.

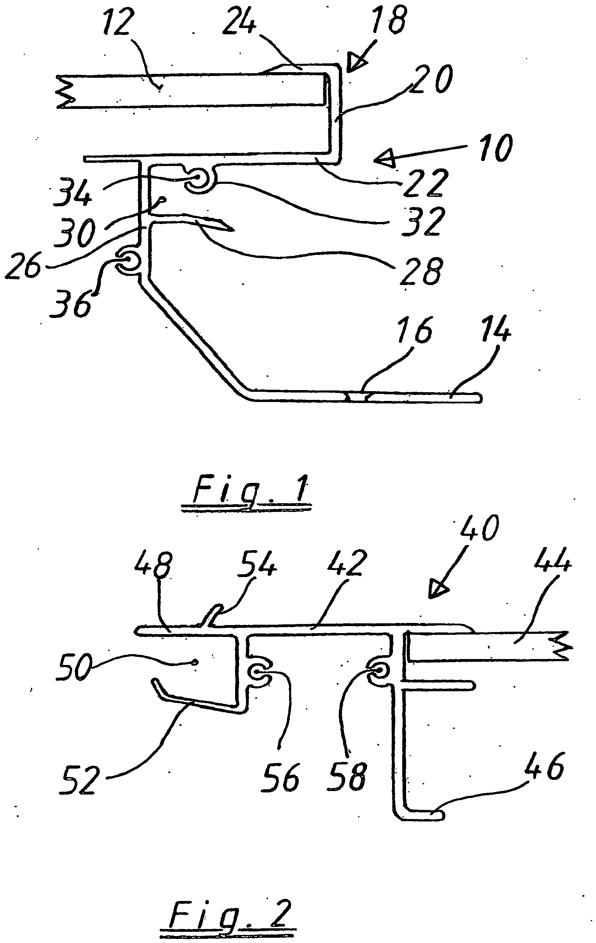

In Fig. 1 ist schematisch im Querschnitt ein traufseitiger Querträger 10 mit einem Randabschnitt eines ersten plattenförmigen Bauelements 12, hier eines Laminats von 80 x 160 cm mit photovoltaischen Elementen, dargestellt. Der traufseitige Querträger 10, ein stranggepresstes Profil aus einer Aluminiumlegierung, besitzt an seiner Unterseite eine zur Traufe hin vorragende Auflage 14 mit Schraublöchern 16 zur Befestigung an der Dachkonstruktion. Auf der Oberseite des traufseitigen Querträgers 10 ist eine U-förmige Halterung 18 angeordnet, die den Rand des plattenförmigen Bauelements 12 umgibt. Die U-förmige Halterung 18 weist eine Basis 20 des U auf, einen unteren Schenkel 22 des U und einen oberen Schenkel 24. Der obere Schenkel 24 ist mit dem plattenförmigen Bauelement 12 durch eine Klebung verbunden. Vom unteren Schenkel 22 der Halterung 18 geht ein zur Auflage 14 führender Steg 26 aus, der an seiner zur Traufe weisenden Seite unterhalb der Halterung 18 einen nach unten gekrümmten Vorsprung 28 aufweist, wodurch zwischen der Halterung 18, dem Steg 26 und dem Vorsprung 28 ein Kanal 30 entsteht. Auf der Unterseite des unteren Schenkels 22 der Halterung 18 ist ein vom Steg 26 beabstandeter Wulst 32 vorgesehen, der zum Vorsprung 28 hin in den Kanal 30 ragt. Auf seiner zum Steg 26 hin weisenden Seite ist der Wulst 32 offenkreisförmig ausgebildet, so dass eine aufgeschlitzte Röhre 34 entsteht. Eine weitere aufgeschlitzte Röhre 36 ist auf der zum First weisenden Seite des Stegs 26 vorgesehen. Die aufgeschlitzten Röhren 34, 36 nehmen bei der werkseitigen Montage der Module selbstschneidende Schrauben auf, die zur Befestigung der seitlichen Längsträger dienen. Die Gesamthöhe des traufseitigen Querträgers 10 von der Auflage 14 bis zum oberen Schenkel 24 beträgt rund 7 cm.

In Fig. 2 ist schematisch im Querschnitt ein firstseitigen Querträger 40 dargestellt, der aus einem etwa T-förmigen stranggepressten Profil aus einer Aluminium-Legierung besteht. Zur Traufe hin bedeckt der Oberbalken 42 den Rand eines zweiten plattenförmigen Bauelements 44, hier ebenfalls eines 80 x 160 cm großen Laminats mit photovoltaischen Elementen, und ist mit diesem durch Klebung verbunden. An seiner Basis besitzt der firstseitige Querträger 40 einen abgewinkelten Abschnitt 46, der in moniertem Zustand zweier Module auf der Auflage 14 des benachbarten traufseitigen Querträgers 10 aufliegt. Zum First hin ist der Oberbalken 42 mit einem Fortsatz 48 versehen, der bei der Montage in den Kanal 30 des traufseitigen Querträgers 10 einschiebbar ist An der Unterseite des Fortsatzes 48 ist eine zum First hin offene Wasserrinne 50 vorgesehen ist, in die der Vorsprung 28 vom Steg 26 des traufseitigen Querträgers 10 hinein ragen kann. Die Unterseite 52 der Wasserrinne 50 ist schräg nach oben abgewinkelt. Auf der Oberseite des Fortsatzes 48 des firstseitigen Querträgers 40 ist eine Lippe 54 vorgesehen, die in montiertem Zustand zweier Module an dem Wulst 32 auf der Unterseite des unteren Schenkels 22 der Halterung 18 des benachbarten traufseitigen Querträgers 10 anliegt. Auch am firstseitigen Querträger 40 sind aufgeschlitzte Röhren 56, 58 zur Aufnahme selbstschneidender Schrauben angeordnet, die zur Befestigung der seitlichen Längsträger dienen. Die Gesamthöhe des firstseitigen Querträgers 40 vom abgewinkelten Abschnitt 46 bis zum Oberbalken 42 beträgt rund 4 cm.

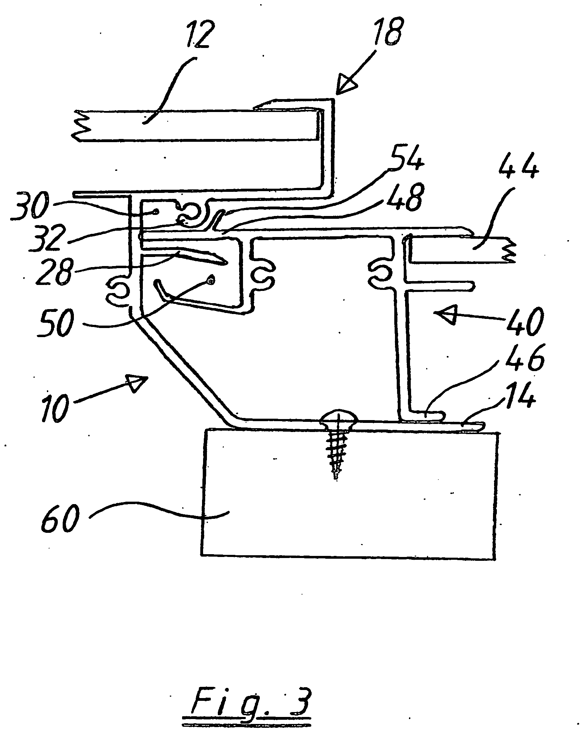

In Fig. 3 ist der mit dem traufseitigen Querträger 10 aus Abb 1 verbundene firstseitige Querträger 40 aus Abb 2 schematisch im Querschnitt dargestellt. Die Fig. 3 zeigt deutlich die komplementäre Ausbildung der Profile und das ineinandergreifende Zusammenwirken in montiertem Zustand. Der traufseitige Querträger 10 ist mit seiner Auflage 14 an einer Stützleiste 60 festgeschraubt. Der firstseitige Querträger 40 des benachbarten Moduls liegt mit seinem abgewinkelten Abschnitt 46 auf der Auflage 14 auf und wird dadurch abgestützt. Der Fortsatz 48 des firstseitigen Querträgers 40 liegt auf dem Vorsprung 28 im Kanal 30 des traufseitigen Trägers 10 und der Vorsprung 28 ragt in die Wasserrinne 50 des firstseitigen Querträgers 40. Die Lippe 54 liegt an dem Wulst 32 an, so dass diese zusammen eine Labyrinth-Dichtung bilden. Gleichzeitig liegt der Wulst 32 auf der Oberseite des Fortsatzes 48 auf und verhindert somit ein Abheben des firstseitigen Querträgers 40 von traufseitigen Querträger 10. Eine Überdeckung findet ausschließlich im Bereich der Querträger 10, 40 statt, so dass das zweite plattenförmige Bauelement 44 nicht vom ersten plattenförmige Bauelement 12 und auch nicht von dessen traufseitigem Querträger 10 beschattet wird.

## Patentansprüche

1. Befestigungssystem für ein plattenförmiges Bauelement (12, 44) auf einem Schrägdach, bei dem das plattenförmige Bauelement (12, 44) ein Modul bildend in einem Rahmen aus profilierten Trägem wasserdicht eingefasst ist und die Dacheindeckung vollwertig ersetzt, wobei zur Montage von in First-Traufe-Richtung benachbarten Modulen die quer zur First-Traufe-Richtung verlaufenden traufseitigen und firstseitigen Querträger (10, 40) des Rahmens aufeinander abgestimmte ineinander greifende Profile aufweisen, die eine regensichere Verbindung bilden, so dass eine partielle Überdeckung der Module in Längsrichtung nur im Bereich dieser Querträger (10, 40) erfolgt,
**dadurch gekennzeichnet,**
**dass** der traufseitige Querträger (10) auf seiner Oberseite eine den Rand des plattenförmigen Bauelements (12) U-förmig umgebende Halterung (18) und an seiner Unterseite eine Auflage (14) zur Befestigung an der Dachkonstruktion aufweist mit einem vom unteren Schenkel (22) der Halterung (18) ausgehenden zur Auflage (14) führenden Steg (26), von dessen zur Traufe weisender Seite unterhalb der Halterung (18) ein Vorsprung (28) ausgeht, so dass zwischen der Halterung (18) und dem Vorsprung (28) ein Kanal (30) entsteht, und
**dass** der firstseitige Querträger (40) einen zum First weisenden Fortsatz (48) aufweist, der bei der Montage eines traufnahen zweiten Moduls in den Kanal (30) des traufseitigen Querträgers (10) des ersten Moduls einschiebbar ist

2. Befestigungssystem nach Anspruch 1,
**dadurch gekennzeichnet,**
**dass** die Auflage (14) zur Traufe hin vorragt.

3. Befestigungssystem nach Anspruch 2,
**dadurch gekennzeichnet**,
in der Auflage (14) Schraublöcher (16) vorgesehen sind.

4. Befestigungssystem nach einem der Ansprüche 1 bis 3,
**dadurch gekennzeichnet,**
**dass** der firstseitige Querträger (40) an seiner Basis abgewinkelt ist, so dass der abgewinkelte Abschnitt (46) in moniertem Zustand zweier Module auf der Auflage (14) des benachbarten traufseitigen Querträgers (10) aufliegt.

5. Befestigungssystems nach einem der Ansprüche 1 bis 4,
**dadurch gekennzeichnet,**
**dass** im Querträger (10, 40) Lüftungsöffnungen vorgesehen sind.

6. Befestigungssystem nach einem der Ansprüche 1 bis 5,
**dadurch gekennzeichnet,**
**dass** an der Unterseite des Fortsatzes (48) des firstseitigen Querträgers (40) eine zum First hin offene Wasserrinne (50) vorgesehen ist, in die der Vorsprung (28) vom Steg (26) des traufseitigen Querträgers (10) des ersten Moduls hinein ragen kann.

7. Befestigungssystem nach Anspruch 6,
**dadurch gekennzeichnet,**
**dass** auf der Unterseite des unteren Schenkels (22) der Halterung (18) ein vom Steg (26) beabstandeter Wulst (32) vorgesehen ist, der zum Vorsprung (28) hin in den Kanal (30) ragt.

8. Befestigungssystem nach Anspruch 7,
**dadurch gekennzeichnet,**
**dass** auf der Oberseite des Fortsatzes (48) des firstseitigen Querträgers (40) eine Lippe (54) vorgesehen ist, die in montiertem Zustand zweier Module an dem Wulst (32) auf der Unterseite des unteren Schenkels (22) der Halterung (18) des traufseitigen Querträgers (10) anliegt.

9. Befestigungssystem nach einem der Ansprüche 1 bis 8,
**dadurch gekenntzeichnet**,
dass für das nächst dem First zu montierende Modul eine an dieses anschließende Anschlusshaube vorgesehen ist, welche firstseitig unter angrenzendes Bedachungsmaterial greifen kann.

10. Befestigungssystem nach einem der Ansprüche 1 bis 9,
**dadurch gekennzeichnet,**
**dass** für am Seitenrand montierende Seitenträger an diese anschließende Seitenschürzen vorgesehen sind, welche seitlich an angrenzendes Bedachungsmaterial anschließbar sind.

11. Befestigungssystem nach einem der Ansprüche 1 bis 10,
**Dadurch gekennzeichnet,**
**dass** für das nächst der Traufe zu montierende Modul eine an dieses anschließende Abschlussschürze vorgesehen ist, welche traufseitig auf angrenzendem Bedachungsmaterial aufliegen kann.

## Claims

1. Fastening system for a panel-like structural element (12, 44) on a pitched roof, in the case of which the panel-like structural element (12, 44), forming a module, is bordered in a water-tight manner in a frame made of profiled carriers, and fully replaces the roof covering, wherein, for the purpose of mounting modules which are adjacent in the ridge/eaves direction, the eaves-side and ridge-side transverse carriers (10, 40) of the frame, these carriers running transversely to the ridge/eaves direction, have interengaging profiles which are coordinated with one another and form a rainproof connection, and therefore partial overlapping of the modules in the longitudinal direction takes place only in the region of these transverse carriers (10, 40),
**characterized**
**in that** the eaves-side transverse carrier (10), on its upper side, has a holder (18), which encloses the periphery of the panel-like structural element (12) in a U-shaped manner, and, on its underside, has a bearing means (14) for fastening on the roof structure, and having a crosspiece (26) which starts from the lower limb (22) of the holder (18) and leads to the bearing means (14) and has a protrusion (28) extending from its side which is oriented towards the eaves, beneath the holder (18), this giving rise to a channel (30) between the holder (18) and the protrusion (28), and
**in that** the ridge-side transverse carrier (40) has an extension (48) which is oriented towards the ridge and, when a second module is mounted in the vicinity of the eaves, can be pushed into the channel (30) of the eaves-side transverse carrier (10) of the first module.

2. Fastening system according to Claim 1,
**characterized**
**in that** the bearing means (14) projects in the direction of the eaves.

3. Fastening system according to Claim 2,
**characterized**
**in that** screw-connection holes (16) are provided in the bearing means (14).

4. Fastening system according to one of Claims 1 to 3,
**characterized**
**in that** the ridge-side transverse carrier (40) is angled at its base, and therefore the angled portion (46), with two modules in the mounted state, rests on the bearing means (14) of the adjacent eaves-side transverse carrier (10).

5. Fastening system according to one of Claims 1 to 4,
**characterized**
**in that** ventilation openings are provided in the transverse carrier (10, 40).

6. Fastening system according to one of Claims 1 to 5,
**characterized**
**in that** the underside of the extension (48) of the ridge-side transverse carrier (40) has provided on it a water duct (50) which is open in the direction of the ridge and into which can project the protrusion (28) from the crosspiece (26) of the eaves-side transverse carrier (10) of the first module.

7. Fastening system according to Claim 6,
**characterized**
**in that** the underside of the lower limb (22) of the holder (18) has provided on it a bead (32) which is spaced apart from the crosspiece (26) and projects into the channel (30) in the direction of the protrusion (28).

8. Fastening system according to Claim 7,
**characterized**
**in that** the upper side of the extension (48) of the ridge-side transverse carrier (40) has provided on it a lip (54) which, with two modules in the mounted state, butts against the bead (32) on the underside of the lower limb (22) of the holder (18) of the eaves-side transverse carrier (10).

9. Fastening system according to one of Claims 1 to 8,
**characterized**
**in that** a connection shroud is provided for the module which is to be mounted next to the ridge, the connection shroud adjoining said module and being capable of engaging, on the ridge side, beneath adjacent roofing material.

10. Fastening system according to one of Claims 1 to 9,
**characterized**
**in that** side skirts are provided for side carriers to be mounted on the side periphery, the side skirts adjoining said side carriers and being capable of connection laterally to adjacent roofing material.

11. Fastening system according to one of Claims 1 to 10,
**characterized**
**in that** a terminating skirt is provided for the module which is to be mounted next to the eaves, the terminating skirt adjoining said module and being capable of resting, on the eaves side, on adjacent roofing material.

## Revendications

1. Système de fixation pour un composant en forme de panneau (12, 44) sur un toit incliné, dans lequel le composant en forme de panneau (12, 44) est serti de façon étanche à l'eau en formant un module dans un cadre en poutres profilées et remplace pleinement la couverture de toit, dans lequel, pour le montage de modules voisins dans la direction faîte-égout, les traverses du cadre côté faîte et côté égout (10, 40) s'étendant transversalement à la direction faîte-égout présentent des profils s'engageant l'un dans l'autre et adaptés l'un à l'autre, qui forment un assemblage étanche à la pluie, de telle manière qu'il se forme un recouvrement partiel des modules dans la direction longitudinale uniquement dans la région de ces traverses (10, 40), **caractérisé en ce que** la traverse côté égout (10) présente sur sa face supérieure un rebord (18) entourant en forme de U le bord du composant en forme de panneau (12) et sur sa face inférieure un appui (14) pour la fixation à la structure du toit, avec une nervure (26) partant de la branche inférieure (22) du rebord (18) et conduisant à l'appui (14), nervure dont la face orientée vers l'égout présente une saillie (28) en dessous du rebord (18), de telle manière qu'il se forme un canal (30) entre le rebord (18) et la saillie (28), et **en ce que** la traverse côté faîte (40) présente un prolongement (48) orienté vers le faîte, qui, lors du montage d'un deuxième module proche de l'égout, peut être inséré dans le canal (30) de la traverse côté égout (10) du premier module.

2. Système de fixation selon la revendication 1, **caractérisé en ce que** l'appui (14) est saillant en direction de l'égout.

3. Système de fixation selon la revendication 2, **caractérisé en ce qu'**il est prévu des trous de vis (16) dans l'appui (14).

4. Système de fixation selon l'une quelconque des revendications 1 à 3, **caractérisé en ce que** la traverse côté faîte (40) est coudée à sa base, de telle manière que la partie coudée (46) repose, à l'état monté de deux modules, sur l'appui (14) de la traverse côté égout voisine (10).

5. Système de fixation selon l'une quelconque des revendications 1 à 4, **caractérisé en ce qu'**il est prévu des ouvertures d'aération dans la traverse (10, 40).

6. Système de fixation selon l'une quelconque des revendications 1 à 5, **caractérisé en ce qu'**il est prévu, sur la face inférieure du prolongement (48) de la traverse côté faîte (40), un chéneau (50) ouvert vers le faîte, dans lequel la saillie (28) de la nervure (26) de la traverse côté égout (10) du premier module peut pénétrer.

7. Système de fixation selon la revendication 6, **caractérisé en ce qu'**il est prévu sur la face inférieure de la branche inférieure (22) du rebord (18) un bourrelet (32) espacé de la nervure (26), qui dépasse dans le canal (30) en direction de la saillie (28).

8. Système de fixation selon la revendication 7, **caractérisé en ce qu'**il est prévu sur la face supérieure du prolongement (48) de la traverse côté faîte (40) une lèvre (54) qui, à l'état monté de deux modules, s'applique sur le bourrelet (32) sur la face inférieure de la branche inférieure (22) du rebord (18) de la traverse côté égout (10).

9. Système de fixation selon l'une quelconque des revendications 1 à 8, **caractérisé en ce qu'**il est prévu, pour le module à monter le plus près du faîte, une coiffe de finition se raccordant à celui-ci, qui peut s'engager côté faîte sous un matériau de couverture adjacent.

10. Système de fixation selon l'une quelconque des revendications 1 à 9, **caractérisé en ce qu'**il est prévu, pour des poutres latérales à monter sur le bord latéral, des jupes latérales se raccordant à celles-ci, qui peuvent être raccordées latéralement à un matériau de couverture adjacent.

11. Système de fixation selon l'une quelconque des revendications 1 à 10, **caractérisé en ce qu'**il est prévu, pour le module à monter le plus près de l'égout, une jupe de finition se raccordant à celui-ci, qui peut reposer côté égout sur un matériau de couverture adjacent.
